# EUROPÄISCHE PATENTSCHRIFT

(11) **EP 2 291 256 B1**
(45) Veröffentlichungstag und Bekanntmachung des Hinweises auf die Patenterteilung: **02.01.2013**
(21) Anmeldenummer: 09765646.6
(22) Anmeldetag: 20.06.2009
(51) Int. Cl.: B23B 51/02

(54) **BOHRER**
DRILL
FORET

(30) Priorität: 21.06.2008 DE 102008029569; 21.08.2008 DE 102008045326
(43) Veröffentlichungstag der Anmeldung: 09.03.2011
(73) Patentinhaber: MAPAL Fabrik für Präzisionswerkzeuge Dr. Kress KG, 73431 Aalen (DE)
(72) Erfinder: KRENZER, Ulrich, 90513 Zirndorf (DE)
(74) Vertreter: Gleiss, Alf-Olav
(86) Internationale Anmeldenummer: PCT/EP2009/004471
(87) Internationale Veröffentlichungsnummer: WO 2009/153066

(56) Entgegenhaltungen:
- WO-A-88/03849
- DE-A1-102006 025 294

## Beschreibung

Die Erfindung betrifft einen Bohrer mit einer Stirnseite und mit einer sich an die Stirnseite anschließenden Umfangsfläche gemäß Oberbegriff des Anspruchs 1, wie er aus der DE 10 2006 025 294 A1 bekannt ist.

Bohrer der hier angesprochenen Art sind bekannt. Sie weisen im Bereich ihrer Stirnseite eine Hauptschneide auf, die eine eine Mittelachse des Bohrers schneidende Querschneide und sich daran anschließende, zur Umfangsfläche verlaufende Hauptschneidenbereiche umfasst. Im Bereich der Umfangsfläche sind drei Fasen vorgesehen, von denen zwei sich direkt an die radial äußeren Enden der Hauptschneidenbereiche anschließen. Eine dritte Fase befindet sich zwischen diesen beiden Fasen. Bei der Bearbeitung eines Werkstücks stützt sich der Bohrer über die Fasen an einer Bohrungsoberfläche ab und wird somit geführt. Die Fasen dienen auch dazu, Vibrationen und ein Verlaufen des Bohrers aus der Rotationsachse zu verhindern. Bei sehr genau gefertigten Spiralbohrern, mit deren Hilfe Bohrungen erzeugt werden, deren Durchmesser dem des Bohrers entspricht, treten an den Fasen hohe Druckspannungen auf, weil sich kaum noch ein Schmierfilm bilden kann. Dies führt dazu, dass die Schnittkräfte und die Temperatur sehr stark ansteigen können, was zu einer kurzen Standzeit des Bohrers und auch zu Materialveränderungen am Werkstück führen kann. Da sich der Bohrer durch die Erwärmung ausdehnt, erhöhen sich noch die Druckspannungen und die damit verbundenen Probleme. Beim Anbohrvorgang werden die Führungsfasen zusätzlich belastet, wenn sich der Bohrer seitlich zu seiner Mittel- oder Rotationsachse verlagert. Die Fasen versuchen, den Bohrer in seiner außermittigen Position zu halten, während er durch die Ausgestaltung der Hauptschneiden in die Rotationsachse zurückgedrängt wird. Häufig werden Bohrungen damit unrund, was zu einer zusätzlichen Belastung und zu einem Verschleiß der Fasen führt. Auch wird die Nachschleifbarkeit des Bohrers erheblich eingeschränkt.

Um diesen Problemen entgegenzuwirken, wurden Spiralbohrer mit zusätzlichen Führungsfasen geschaffen, die dazu beitragen, die Rundheit der Bohrung zu erhöhen. Sie haben jedoch den Nachteil, dass sie keine größeren Verlagerungen des Bohrers aus der Rotationsachse heraus kompensieren können und sich damit sogar nachteilig auf die Standzeit auswirken.

Aufgabe der Erfindung ist es daher, einen Bohrer der eingangs genannten Art zu schaffen, der diese Nachteile nicht aufweist.

Zur Lösung dieser Aufgabe wird ein Bohrer mit einer Stirnseite und mit einer sich an die Stirnseite anschließenden Umfangsfläche vorgeschlagen. An der Stirnseite ist eine Hauptschneide vorgesehen mit einer Querschneide, welche die Mittel- oder Rotationsachse des Bohrers schneidet. An die Enden der Querschneide schließen sich zur Umfangsfläche verlaufende erste und zweite Hauptschneidenbereiche an. In die Umfangsfläche sind mindestens zwei Spannuten eingebracht, die dazu dienen, von der Hauptschneide abgetragene Späne aus dem Arbeitsbereich zu entfernen. Zwischen den Spannuten bleiben erste und zweite Stege. Die Umfangsfläche weist außerdem drei Fasen auf, von denen eine erste an das der Querschneide abgewandte Ende des ersten Hauptschneidenbereichs anschließt und als Führungsfase dient, und eine zweite an das der Querschneide abgewandte Ende des zweiten Hauptschneidenbereichs anschließt, die eine Freischneide aufweist. Die dritte Fase dient als Stützfase.

Der Bohrer zeichnet sich dadurch aus, dass die Führungsfase an dem ersten Steg angeordnet ist, während sich die Stützfase gemeinsam mit der die Freischneide aufweisenden Freischneidefase an dem zweiten Steg befindet.

Die Verteilung der Fasen auf der Umfangsfläche des Bohrers, wie sie hier vorgeschlagen wird, bewirkt eine optimale Führung sowohl während eines Anbohrvorgangs als auch während der weiteren Herstellung einer Bohrung in einem Werkstück. Der Bohrer wird dabei so abgestützt, dass ein Verlaufen aus der Mittel- beziehungsweise Rotationsachse aber auch ein Rattern während der Bearbeitung eines Werkstücks sicher vermieden werden.

Ein bevorzugtes Ausführungsbeispiel des Bohrers zeichnet sich dadurch aus, dass die Fasen so an der Umfangsfläche angeordnet sind, dass bei der Bearbeitung eines Werkstücks über die Fasen in den Bohrer eingeleitete Kräfte so gerichtet sind, dass sich eine Kraft-Resultierende ergibt, die in Richtung oder praktisch in Richtung der Querschneide verläuft und dazu führt, dass der Bohrer parallel zu dieser oder im Wesentlichen parallel zur Querschneide, das heißt in Längsrichtung der Querschneide, verschoben wird und sich in der Bohrung zentriert. Damit wird ein Rattern vermieden. Außerdem schneidet sich der Bohrer bei einem Verschleiß der Hauptschneide frei.

Ein bevorzugtes Ausführungsbeispiel des Bohrers zeichnet sich dadurch aus, dass die Winkelteilung der beiden Hauptschneidenbereiche ungleich ist, sodass sie in der Stirnseite des Bohrers nicht gemeinsam auf einer gedachten Durchmesserlinie liegen, sondern unter einem Winkel zueinander angeordnet sind, der von 180° abweicht. Diese Ausgestaltung führt ebenfalls dazu, dass der Bohrer beim Anbohren und während der Bearbeitung eines Werkstücks geführt wird und ein Ausweichen aus der gewünschten Rotationsachse und ein Rattern vermieden werden.

Ein weiteres Ausführungsbeispiel des Bohrers zeichnet sich dadurch aus, dass die in Umfangsrichtung gemessene Breite der Stege verschieden ist und dass die Stützfase und auch die Fase mit der Freischneide an dem breiteren Steg vorgesehen sind.

Ein weiteres bevorzugtes Ausführungsbeispiel zeichnet sich dadurch aus, dass die Hauptschneidenbereiche in axialer Richtung des Bohrers gesehen zueinander versetzt sind. Dabei eilt der Hauptschneidenbereich, dessen Fase an demselben Steg vorgesehen ist wie die Stützfase, gegenüber dem anderen Hauptschneidenbereich axial vor.

Weitere Ausgestaltungen ergeben sich aus den übrigen Unteransprüchen.

Die Erfindung wird im Folgenden anhand der Zeichnung näher erläutert. Es zeigen:
- Figur 1: eine Stirnseitenansicht eines Bohrers;
- Figur 2: die Ansicht gemäß Figur 1 mit Hilfslinien zur Erläuterung eines Freischneide-Effekts und

- Figur 3: eine Seitenansicht des vorderen Teils eines Bohrers gemäß Figur 1.

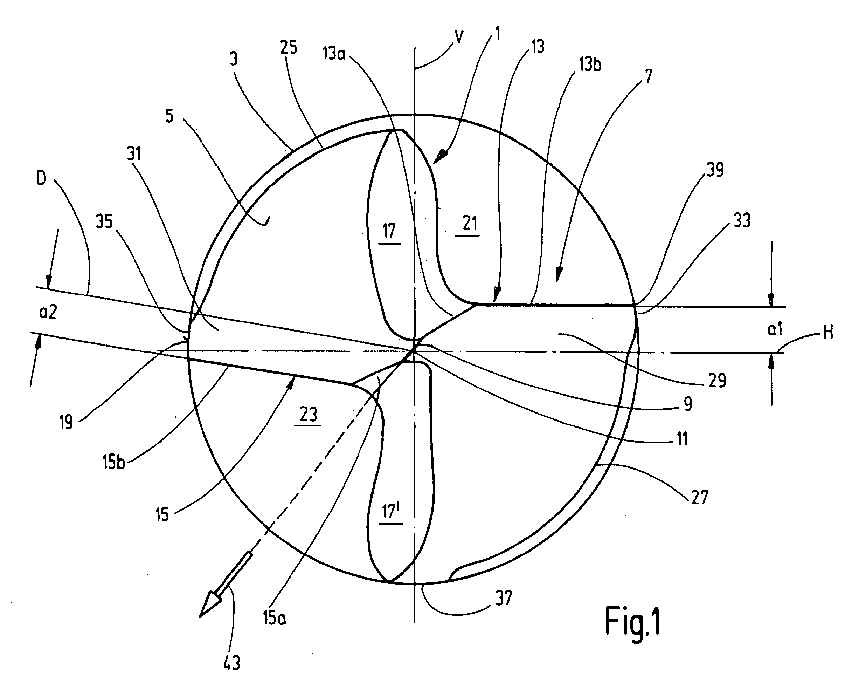

Figur 1 gibt einen Bohrer 1 in Stirnansicht wieder. Zur Vereinfachung der Erläuterungen ist durch einen Kreis 3 die Wand einer mit dem Bohrer 1 bearbeiteten Bohrung in einem Werkstück angedeutet.

Der Bohrer 1 weist eine Stirnseite 5 auf, die in Figur 1 in Draufsicht wiedergegeben ist. Diese umfasst eine Hauptschneide 7 mit mehreren Bereichen, nämlich mit einer Querschneide 9, die durch die Mittelachse 11 des Bohrers 1 verläuft, und mit zwei an die Querschneide 9 Hauptschneidenbereichen 13 und 15.

In die Stirnseite 5 ist hier eine Ausspitzung 17, 17' eingebracht, die der Verkürzung der Querschneide 9 dient. Eine derartige Ausgestaltung ist grundsätzlich bekannt, sodass hier nicht näher darauf eingegangen wird.

In die Umfangsfläche 19 des Bohrers 1, die im Wesentlichen senkrecht zur Bildebene von Figur 1 verläuft und sich an die Stirnseite 5 anschließt, sind zwei Spannuten 21, 23 eingebracht, die dem Abtransport von bei der Bearbeitung eines Werkstücks entstehenden Spänen dienen. Zwischen diesen liegen Stege 25 und 27.

In Figur 1 sind eine gestrichelte horizontale Linie H und eine gestrichelte vertikale Linie V eingezeichnet, in deren Schnittpunkt die senkrecht auf der Bildebene von Figur 1 stehende Mittelachse 11 liegt. Sie stellt bei der Bearbeitung eines Werkstücks die Rotationsachse des Bohrers 1 dar. Der erste Hauptschneidenbereich 13 geht von der Querschneide 9 aus. Ein erster Abschnitt 13a verläuft, bedingt durch die Ausspitzung 17, zunächst nach rechts oben, hier beispielhaft unter einem Winkel von ca. 30°. Ein sich anschließender Abschnitt 13b des Hauptschneidenbereichs 13 verläuft dann weiter zur Umfangsfläche 19 des Bohrers 1, hier im Wesentlichen parallel zur horizontalen Linie H. Er ist in einem Abstand a1 zu dieser angeordnet.

Auf der anderen Seite der Querschneide 9 setzt der Hauptschneidenbereich 15 an, dessen erster Abschnitt 15a bedingt durch die Ausspitzung 17' hier beispielsweise etwa unter einem Winkel von etwas über 25° zur Horizontalen H verläuft, und dessen zweiter Abschnitt 15b bis zur Umfangslinie 19 reicht. Dieser Abschnitt 15b läuft etwas nach links oben in Figur 1. Zieht man eine Durchmesserlinie D durch die Mittelachse 11 und legt diese so, dass sie etwa parallel zu dem nach schräg links oben verlaufenden Abschnitt 15b des Hauptschneidenbereichs 15 liegt, so ergibt sich hier ein Abstand a2 zwischen der Durchmesserlinie D und diesem Abschnitt 15b. Bei dem hier dargestellten Ausführungsbeispiel ist a1 kleiner als a2.

Die Stirnseite 5 des Bohrers 1 fällt, ausgehend von dem die Umfangsfläche 19 des Bohrers 1 schneidenden Abschnitt 15b des Hauptschneidenbereichs 15 in die Bildebene hinein ab. Entsprechend fällt die Stirnseite 5 ausgehend von dem die Umfangsfläche 19 des Bohrers 1 schneidenden Abschnitt 13b des ersten Hauptschneidenbereichs 13 in die Bildebene von Figur 1 hinein ab. Es werden auf diese Weise eine Hauptfreifläche 29 des Hauptschneidenbereichs 13 und eine Hauptfreifläche 31 des Hauptschneidenbereichs 15 geschaffen.

Aus der Stirnseitenansicht des Bohrers 1 wird deutlich, dass dieser sich über drei Fasen an der durch den Kreis 3 angedeuteten Bohrungswand abstützt, wenn der Bohrer 1 in eine Bohrung in einem hier nicht dargestellten Werkstück eindringt. Dabei ist vorgesehen, dass sich eine erste Freischneidenfase 33 an das der Querschneide 9 abgewandte Ende des ersten Hauptschneidenbereichs 13 anschließt, und dass sich an das der Querschneide 9 abgewandte Ende des zweiten Hauptschneidenbereichs 15 eine vorzugsweise als Rundschlifffase ausgebildete Führungsfase 35 anschließt. Der Bohrer 1 stützt sich schließlich über eine dritte Fase, die als Stützfase 37 bezeichnet wird, an der Bohrungswand ab.

Figur 1 zeigt deutlich, dass an dem ersten Steg 25 die Führungsfase 35 vorgesehen ist, und dass an dem zweiten Steg 27 sowohl die Freischneidenfase 31 als auch die Stützfase 37 vorgesehen sind. Die Stützfase 37 schließt mit einem der der Querschneide 9 abgewandten Enden der ersten und zweiten Hauptschneidenbereiche 13, 15 einen Winkel von 45° bis 100° ein. Die Fase, die der Stützfase 37 am nächsten ist, hier also die Freischneidefase 33, ist mit einem radialen Freiwinkel versehen.

Der an dem zweiten Steg 27 vorgesehenen Freischneidenfase 33 ist eine Freischneide 39 zugeordnet.

Bei der Bearbeitung eines Werkstücks mit dem Bohrer 1 dreht sich dieser, wie durch einen Pfeil 41 angedeutet, bei der Darstellung gemäß Figur 1 gegen den Uhrzeigersinn. Grundsätzlich ist es möglich, das Werkstück in Rotation zu versetzen und den Bohrer festzuhalten oder auch beide Teile gegensinnig rotieren zu lassen, um eine Relativdrehung zu bewirken. Trägt die Hauptschneide 7 von einem Werkstück Späne ab, so fließen diese in die Spannuten 21 und 23, die senkrecht in die Bildebene von Figur 1 abfallen. Dabei gelangen die von dem Hauptschneidenbereich 13 abgetragenen Späne in den - in Drehrichtung gesehen - voreilenden Spanraum 21 und die von dem Hauptschneidenbereich 15 abgetragenen Späne in den zugehörigen Spanraum 23.

Bei der Bearbeitung einer Bohrung werden Kräfte in den Bohrer 1 eingeleitet und zwar über die Hauptschneide 7 und über die drei Fasen. Dies führt dazu, dass der Bohrer 1 sicher an der Führungsfase 35 und der Stützfase 37 anliegt und in der entstehenden Bohrung gut geführt wird.

Sollte es zu einem Verschleiß der Hauptschneide 7 kommen, so reduziert sich der Durchmesser der entstehenden Bohrung im Werkstück, also auch der des in Figur 1 wiedergegebenen Kreises 3. Dies kann zum Einklemmen des Bohrers 1 in der entstehenden Bohrung führen.

Bei dem in Figur 1 dargestellten Ausführungsbeispiel wird durch die Freischneide 39 bei einem Verschleiß der Hauptschneide 7 sichergestellt, dass sich der Bohrer 1 freischneidet, also im Werkstück nicht eingeklemmt wird.

Figur 1 zeigt auch noch, dass bei einem Rattern des Bohrers 1 dieser von den drei Fasen, der Freischneidenfase 33, der Führungsfase 35 und der Stützfase 37, in der Bohrungswand abgestützt wird. Diese Kräfte ergeben gemeinsam mit den über die Hauptschneide 7 in den Bohrer 1 eingeleiteten Kräften, eine Kraft-Resultierende mit der durch den Doppelpfeil 43 angedeuteten Richtung. Dadurch wird der Bohrer sicher -in Figur 1 nach links unten- gegen die Führungsfase 35 und die Stützfase 37 angelegt, sodass das Rattern unterdrückt wird.

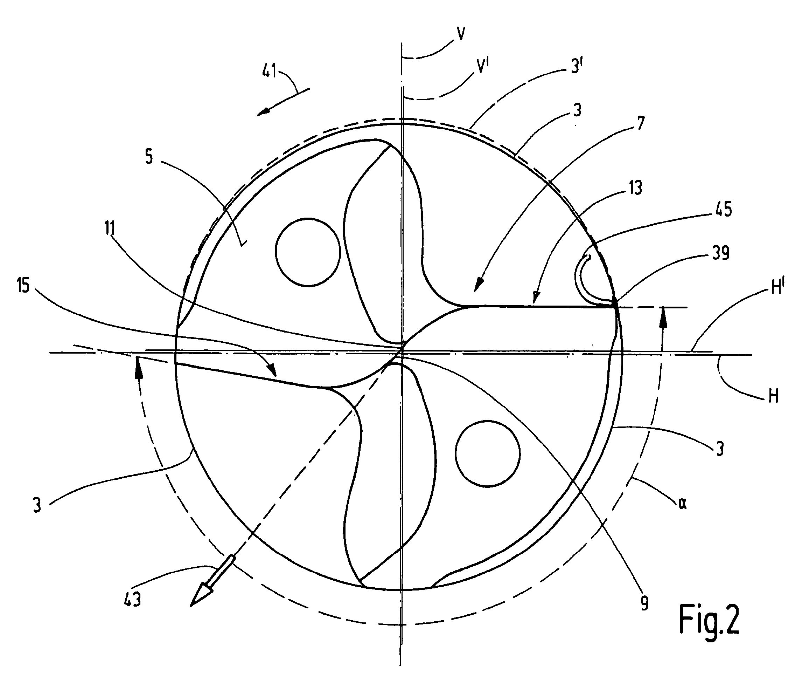

Figur 2 zeigt den Bohrer 1 in Stirnseitenansicht. Durch Hilfslinien soll der Freischneide-Effekt näher erläutert werden. Gleiche Teile sind mit gleichen Bezugsziffern versehen, sodass insofern auf die Beschreibung zu Figur 1 verwiesen wird. Einige für die Erläuterungen zu Figur 2 entbehrliche Bezugsziffern sind aus Gründen der besseren Übersichtlichkeit weggelassen.

In Figur 2 sind die gestrichelte horizontale Linie H und die gestrichelte vertikale Linie V erkennbar, die sich im Mittelpunkt einer durch den Kreis 3 angedeuteten Bohrung schneiden und in deren Schnittpunkt die Mittelachse 11 des Bohrers liegt. Bei Verwendung des Bohrers 1 und bei Bearbeitung eines Werkstücks trägt die an der Stirnseite 5 vorgesehene Hauptschneide 7 Späne von dem hier nicht dargestellten Werkstück ab. Es wirken dabei über die Hauptschneide 7 und über die drei Fasen, die Freischneidenfase 33, die Führungsfase 35 und die Stützfase 37, Kräfte auf den Bohrer 1, wobei sich bei einer Drehung des Bohrers 1 in Richtung des Pfeils 41 die in Richtung des Doppelpfeils 43 weisende Kraft-Resultierende ergibt, die auf einer gedachten Linie liegt, welche in Verlängerung der Querschneide 9 verläuft Der Bohrer 1 - also auch dessen Querschneide 9 - wird also nach links unten gedrückt und somit im wesentlichen parallel oder exakt parallel zu seiner Querschneide 9 verlagert, damit er sicher an der Führungsfase 35 und der Stützfase 37 anliegt und in der Bohrung geführt wird. Diese Kraft-Resultierende 43 sorgt dafür, dass ein Rattern sicher vermieden, zumindest stark vermindert wird.

Bei einem Verschleiß der Hauptschneide 7 vermindert sich der Durchmesser der von dem Bohrer 1 erzeugten Bohrung, sodass die Bohrungswand nicht mehr auf dem Kreis 3 sondern auf dem gestrichelt dargestellten Kreis 3' liegt. Dessen Mittelpunkt fällt mit dem Schnittpunkt der durchgezogenen horizontalen Linie H' und der durchgezogenen vertikalen Linie V' zusammen. Durch die in Richtung des Doppelpfeils 43 wirkenden Kräfte wird der Bohrer weiterhin nach links unten gedrängt.

Da sich bei Verschleiß der Hauptschneide 7 der Durchmesser des die Bohrungswandung repräsentierenden Kreises 3' reduziert, würde der Bohrer 1, dessen Durchmesser außer im Bereich der verschlissenen Hauptschneide 7 gleichgeblieben ist, in der entstehenden Bohrung festgeklemmt. Es zeigt sich aber, dass gemäß Figur 2 in diesem Fall die Freischneide 39 Späne 45 von der Bohrungswand abträgt und den Durchmesser der Bohrung 1 dadurch vergrößert, sodass sich der Bohrer 1 freischneidet und ein Einklemmen in der Bohrung verhindert wird. Die Verlagerung des Bohrers 1 nahezu oder exakt parallel zu seiner Querschneide 9 soll heißen, dass dieser praktisch in Längsrichtung der Querschneide 9 verschoben wird. Dadurch werden die Spannungsdicken an der Querschneide 9 und an den Hauptschneidenbereichen 13, 15 in einer Größenordnung von weniger als 1 % verändert. Für die Schneiden ergibt sich also keine wesentliche Mehrbelastung. Da bei einer derartigen Verlagerung der der Freischneide 39 zugeordnete Hauptschneidenbereich 13 mit einer größeren Spannungsdicke belastet wird, werden ein sicheres Anliegen des Bohrers 1 an der Stützfase 37 gewährleistet und Vibrationen beziehungsweise Rattern vermieden.

In Figur 2 ist der Teilungswinkel α zwischen den Hauptschneidenbreichen 13 und 15 eingezeichnet. Es ist ohne Weiteres erkennbar, dass diese Bereiche einander nicht unmittelbar gegenüber liegen und dass daher der Teilungswinkel hier von 180° abweicht und > 180° ist. Bei dieser bevorzugten Ausgestaltung ergibt sich eine definierte resultierende Schnittkraft in radialer Richtung, die dazu führt, dass der Bohrer 1 eine Bohrung mit Übermaß produziert. Dabei bleibt aber die Querschneide 9 mittig angeordnet, sodass sie den Bohrer 1 in einer Bohrung zentriert und während eines Anbohrvorgangs stabilisiert.

Figur 2 zeigt auch, dass die Stützfase 37 gerade im Bereich dieses Teilungswinkels α liegt, der > 180° ist.

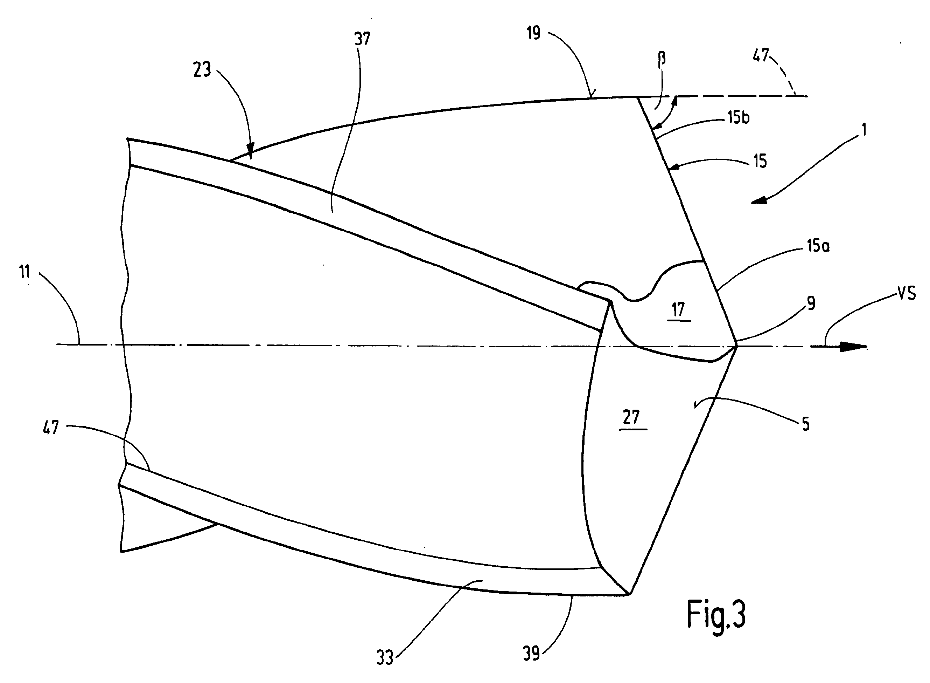

Figur 3 zeigt schließlich das vordere abgebrochene Ende des Bohrers 1 in Seitenansicht, wobei gleiche Teile mit gleichen Bezugsziffern versehen wurde, sodass auf die Beschreibung von Figur 1 verwiesen wird. Allerdings wurden aus Gründen der besseren Übersichtlichkeit einige für die Erläuterungen zu Figur 3 entbehrliche Bezugsziffern weggelassen.

Es wird hier deutlich, dass der Bohrer 1 mit entlang einer gedachten Schraubenlinie verlaufenden Spannuten versehen ist, von denen hier die Spannut 23 zu sehen ist. Denkbar ist es auch, einen Bohrer mit Spannuten zu versehen, die parallel zu dessen Mittelachse 11 ausgerichtet sind.

Es ist ein Teil der Stirnseite 5 zu sehen, auf der die die Mittelachse 11 schneidende Querschneide 9 und die Hauptschneide 7 angeordnet sind, von der hier der zweite Hauptschneidenbereich 15 oberhalb der Mittelachse 11 zu erkennen ist. Der an die Querschneide 9 und an die Ausspitzung 17 angrenzende erste Abschnitt 15a des zweiten Hauptschneidenbereichs geht in den zweiten Abschnitt 15b über, der sich bis zur Umfangsfläche 19 erstreckt.

In Figur 3 liegt unterhalb der Spannut 23 die angrenzende Stützfase 37. Unten ist die Freischneide 39 mit der zugehörigen Freischneidenfase 33 zu sehen. Diese wird durch eine schmale, im Idealfall linienförmige Rundschlifffase realisiert. Durch eine Linie 47 ist angedeutet, dass die Freischneide 31 einen Freiwinkel aufweisen kann, sodass hier eine Freischneidenfreifläche gebildet wird.

In Figur 3 ist der Anstellwinkel β eingezeichnet, der zwischen dem zweiten Hauptschneidenbereich 15 und einer Hilfslinie 47 gemessen wird, die parallel zur Mittellinie 11 des Bohrers 1 verläuft. Entsprechend wird der Ausstellwinkel des in Figur 3 nicht sichtbaren Hauptschneidenbereichs 13 gemessen.

Zur Stabilisierung des Bohrers 1 in einer zu bearbeitenden Bohrung ist vorgesehen, dass einer der beiden Hauptschneidenbereiche gegenüber dem anderen in axialer Richtung, also in Richtung der Mittelachse 11 und in Vorschubrichtung VS gesehen, voreilt. Vorzugsweise ist vorgesehen, dass der der Freischneide 39 zugeordnete Hauptschneidenbereich 13 gegenüber dem der Führungsfase 35 zugeordneten Hauptschneidenbereich 15 axial voreilt. Es gibt mehrere Möglichkeiten, dies zu erreichen:

Anhand von Figur 1 soll eine erste Ausführungsvariante erläutert werden: Die sich an den ersten Hauptschneidenbereich 13 anschlie-βende Hauptfreifläche 29 fällt, ausgehend von dem Hauptschneidenbereich 13 in die Bildebene von Figur 1 ab. Auch der zweite Hauptschneidenbereich 15 fällt in die Bildebene hinein ab, sodass hier die Hauptfreifläche 31 gebildet wird. Der Abschnitt 13b des ersten Hauptschneidenbereichs 13 verläuft in einem Abstand a1 parallel zur horizontalen Linie H. Parallel zum Abschnitt 15b des Hauptschneidenbereichs 15 ist die die Mittellinie 11 schneidende Durchmesserlinie D eingezeichnet, die in einem Abstand a2 zum Abschnitt 15b verläuft. Die Abstände a1 und a2 kennzeichnen den Vormittestand des Abschnitts 13b des Hauptschneidenbereichs 13 und des Abschnitts 15b des Hauptschneidenbereichs 15. Es gilt hier: a1 > a2, was aus Figur 1 nicht ohne weiteres erkennbar ist, das heißt, der Vormitteabstand a1 des Abschnitts 13b ist größer als der Vormitteabstand a2 des Abschnitts 15b. Daraus ergibt sich, dass der erste Hauptschneidenbereich 13 gegenüber dem zweiten Hauptschneidenbereich 15 in axialer Richtung voreilt. Der Abschnitt 13b springt also weiter auf den Betrachter der Figuren 1 und 2 vor als dies bei dem Abschnitt 15b des zweiten Hauptschneidenbereichs 15 der Fall ist. Durch verschieden große Vormittestände ist es also möglich, einen axialen Versatz der beiden Hauptschneidenbereiche zueinander zu erreichen, und die axiale Voreilung des ersten Hauptschneidenbereichs 13 durch einen größeren Vormittestand, also Abstand a1, zu realisieren.

Eine weitere Möglichkeit, verschiedene axiale Positionen der beiden Hauptschneidenbereiche zu realisieren, besteht darin, den beiden Hauptschneidenbereichen verschiedene Anstellwinkel β zuzuordnen.

Der Anstellwinkel β des zweiten Hauptschneidenbereichs 15 ergibt sich aus Figur 3, er wurde, wie erläutert, gegenüber einer Hilfslinie 47 gemessen, die parallel zur Mittelachse 11 des Bohrers 1 verläuft. Bei der Darstellung gemäß Figur 3 beträgt der Anstellwinkel β des zweiten Hauptabschnittsbereichs 15 rein beispielhaft etwas mehr als 20°. Wird für den ersten Hauptschneidenbereich 13 derselbe Anstellwinkel gewählt, liegen beide Hauptschneidenbereiche 13 und 15 -in Richtung der Mittelachse 11 beziehungsweise der durch den Pfeil VS angedeuteten Vorschubrichtung gesehen- auf gleicher axialer Höhe. Wird für den ersten Hauptschneidenbereich 13, beziehungsweise für dessen Abschnitt 13b, ein größerer Anstellwinkel β gewählt als für den zweiten Hauptschneidenbereich 15, so eilt der erste Hauptschneidenbereich 13 dem zweiten Hauptschneidenbereich 15, der in Figur 3 sichtbar ist, in axialer Richtung vor. Die Winkeldifferenz beträgt vorzugsweise weniger als 1 °.

Es ist überdies möglich, einen axialen Versatz der beiden Hauptschneidenbereiche 13 und 15 dadurch zu realisieren, dass die beiden Hauptschneidenbereiche einen voneinander abweichenden Verlauf aufweisen:

Das in Figur 3 dargestellte Ausführungsbeispiel des Bohrers 1 zeigt gerade ausgebildete Hauptschneidenbereiche 13 und 15. Es ist aber häufig vorgesehen, diese hohl oder ballig auszubilden. Denkbar ist es auch, einen Hauptschneidenbereich hohl und den anderen ballig auszugestalten.

Werden zwei hohl ausgebildete Hauptschneidenbereiche vorgesehen, so eilt derjenige in axialer Richtung vor, der weniger hohl ist. Wird einer der Hauptschneidenbereiche hohl und der andere gerade ausgebildet, so eilt der gerade ausgebildete Hauptschneidenbereich axial vor. Wird einer der Hauptschneidenbereiche gerade und der andere ballig ausgebildet, so eilt der ballige Hauptschneidenabschnitt axial vor. Wird schließlich vorgesehen, beide Hauptschneidenbereiche ballig auszubilden, so eilt derjenige axial vor, der balliger ist.

Aus den Erläuterungen zu den Figuren 1 bis 3 wird deutlich, dass es auf einfache Weise möglich ist, einen Bohrer 1 während des Anbohrvorgangs bei der Bearbeitung eines Werkstücks zu zentrieren, außerdem ein Einklemmen des Bohrers 1 bei einem Verschleiß der Hauptschneide 7 zu verhindern, und schließlich Vibrationen und Rattern bei der Bearbeitung von Werkstücken sicher zu vermeiden. Dabei bedarf es keiner aufwendigen Herstellung des Bohrers 1. Es zeigt sich, dass die Verteilung der drei Fasen des Bohrers 1 auf die Stege 25 und 27 die gewünschten Effekte bewirkt. Dabei ist die Führungsfase 35 des zweiten Hauptschneidenbereichs 17 auf einem der durch Spannuten 21 und 23 abgegrenzten Steg 25 vorgesehen, während die beiden anderen Fasen auf dem anderen Steg 27 angeordnet sind, nämlich die Freischneidenfase 33 und die Stützfase 37, was insbesondere aus den Stirnseitenansichten gemäß den Figuren 1 und 2 deutlich erkennbar ist.

Durch die hier gewählte Ausgestaltung des Bohrers 1 ergibt sich die Möglichkeit, diesen bei hohen Schnittgeschwindigkeiten von 100 m/min bis beispielweise 250 m/min, vorzugsweise 200 m/min, einzusetzen. Bei derartigen Schnittgeschwindigkeiten wird sehr viel Wärme in das Werkzeug eingeleitet. Oben wurde erläutert, dass durch diese Erwärmung eine Ausdehnung des Bohrers 1 bewirkt wird. Deswegen ist die beschriebene Freischneidewirkung also wichtig. Da der Bohrer 1 außerdem sicher an der Stützfase 37 anliegt, ist gewährleistet, dass das Werkstück selbst dabei nicht übermäßig erhitzt wird und möglicherweise Schaden nimmt. Die hier gewählte Bauform stellt dabei außerdem sicher, dass Vibrationen und Rattern mit hoher Sicherheit vermieden, zumindest stark reduziert werden.

## Patentansprüche

1. Bohrer mit
- einer Stirnseite (5) und mit
- einer sich an die Stirnseite (5) anschließenden Umfangsfläche (19), wobei
- die Stirnseite (5) eine Hauptschneide (7) mit einer durch eine Mittelachse (11) des Bohrers (1) verlaufenden Querschneide (9) und mit zwei sich an die Querschneide (9) anschließenden, zur Umfangsfläche (19) verlaufenden ersten und zweiten Hauptschneidenbereichen (13,15) aufweist,
- die Umfangsfläche (19) mindestens zwei Spannuten (21,23) umfasst, die einen ersten und zweiten Steg (25,27) zwischen sich begrenzen, über dies drei Fasen, von denen
- eine erste an das der Querschneide (9) abgewandte Ende des ersten Hauptschneidenbereichs (13) anschließt und als Freischneidenfase (33) dient, außerdem eine Freischneide (39) aufweist, und
- eine zweite an das der Querschneide (9) abgewandte Ende des zweiten Hauptschneidenbereichs (15) anschließt und als Führungsfase (35) dient,
- eine dritte als Stützfase (37) dient,
**dadurch gekennzeichnet, dass**
- die Führungsfase (35) an dem ersten Steg (25) und
- die Stützfase (37) gemeinsam mit der die Freischneide (39) aufweisenden Freischneidenfase (33) an dem zweiten Steg (27) angeordnet sind.

2. Bohrer nach Anspruch 1, **dadurch gekennzeichnet, dass** der zweite Steg (27) - in Umfangsrichtung gesehen - breiter ist als der erste Steg (25).

3. Bohrer nach Anspruch 1 oder 2, **dadurch gekennzeichnet, dass** die Fasen so an der Umfangsfläche (19) des Bohrers (1) angeordnet sind, dass bei Verwendung des Bohrers (1) über die sich an einer Bohrungswand abstützenden Fasen Kräfte in den Bohrer (1) eingeleitet werden, deren Resultierende im Wesentlichen parallel oder exakt parallel zur Querschneide (9) der Hauptschneide (7) verläuft.

4. Bohrer nach einem der vorhergehenden Ansprüche, **dadurch gekennzeichnet, dass** die Stützfase (37) in einem Winkel von 45° bis 100° zu einem der der Querschneide 9 abgewandten Enden der Hauptschneidenbereiche (13,15) angeordnet ist.

5. Bohrer nach einem der vorhergehenden Ansprüche, **dadurch gekennzeichnet, dass** der Teilungswinkel (α) zwischen den Hauptschneidenbereichen (13,15) ungleich 180° ist.

6. Bohrer nach Anspruch 5, **dadurch gekennzeichnet, dass** der Teilungswinkel (α) > 180° ist, und dass im Bereich dieses Teilungswinkels (α) die Stützfase (37) angeordnet ist.

7. Bohrer nach Anspruch 5 oder 6, **dadurch gekennzeichnet, dass** an dem zweiten Steg (27), dessen in Umfangsrichtung gemessene Breite größer als die des anderen ist, die Freischneidenfase (33) mit der Freischneide (39) und die Stützfase (37) vorgesehen sind.

8. Bohrer nach einem der vorhergehenden Ansprüche, **dadurch gekennzeichnet, dass** der Hauptschneidenbereich (13), dessen Fase an demselben zweiten Steg (27) vorgesehen ist wie die Stützfase (37), gegenüber dem anderen Hauptschneidenbereich (15) axial, also in Richtung der Mittelachse (11) und in Vorschubrichtung (VS) des Bohrers (1) gesehen, voreilt.

9. Bohrer nach Anspruch 8, **dadurch gekennzeichnet, dass** die axiale Voreilung durch einen größeren Vormittestand (a1,a2) des voreilenden Hauptschneidenbereichs realisierbar ist.

10. Bohrer nach Anspruch 8, **dadurch gekennzeichnet, dass** die axiale Voreilung durch einen größeren Anstellwinkel (β) des voreilenden Hauptschneidenbereichs realisierbar ist.

11. Bohrer nach Anspruch 8, **dadurch gekennzeichnet, dass** die axiale Voreilung durch einen gegenüber dem anderen Hauptschneidenbereich abweichenden Verlauf des voreilenden Hauptschneidenbereichs realisierbar ist.

12. Bohrer nach einem der vorhergehenden Ansprüche, **dadurch gekennzeichnet, dass** die Freischneide (39) einen Freiwinkel aufweist.

13. Bohrer nach einem der vorhergehenden Ansprüche, **dadurch gekennzeichnet, dass** er eine Ausspitzung (17,17') aufweist.

## Claims

1. A drill, comprising
- a front side (5) and comprising
- a peripheral surface (19), which connects to the front side (5), wherein
- the front side (5) encompasses a main cutting edge (7) comprising a transverse cutting edge (9), which runs through a central axis (11) of the drill (1), and comprising two first and second main cutting edge regions (13, 15), which adjoin the transverse cutting edge (9) and which run towards the peripheral surface (19),
- the peripheral surface (19) comprises at least two chip grooves (21, 23), which define a first and a second bar (25, 27) between one another, moreover three bevels, of which
- a first bevel connects to the end of the first main cutting edge region (13), which faces away from the transverse cutting edge (9), and which serves as free cutting bevel (33), in addition encompassing a free cutting edge (39) and
- a second bevel connects to the end of the second main cutting edge region (15), which faces away from the transverse cutting edge (9) and which serves as guide bevel (35),
- a third bevel serves as support bevel (37),
**characterized in that**
- the guide bevel (35) is arranged on the first bar (25) and
- the support bevel (37), together with the free cutting bevel (33), which encompasses the free cutting edge (39), are arranged on the second bar (27).

2. The drill according to claim 1, **characterized in that** the second bar (27) - viewed in peripheral direction - is wider than the first bar (25).

3. The drill according to claim 1 or 2, **characterized in that** the bevels are arranged on the peripheral surface (19) of the drill (1) such that, when using the drill (1), forces, the resultant of which runs substantially parallel or exactly parallel to the transverse cutting edge (9) of the main cutting edge (7), are introduced into the drill (1) via the bevels, which are supported on a drill wall.

4. The drill according to any one of the preceding claims, **characterized in that** the support bevel (37) is arranged at an angle of from 45° to 100° relative to one of the ends of the main cutting edge regions (13, 15), which faces away from the transverse cutting edge (9).

5. The drill according to any one of the preceding claims, **characterized in that** the angular pitch (α) between the main cutting edge regions (13, 15) does not equal 180°.

6. The drill according to claim 5, **characterized in that** the angular pitch (α) is > 180°, and **in that** the support bevel (37) is arranged in the region of this angular pitch (α).

7. The drill according to claim 5 or 6, **characterized in that**, at the second bar (27), the width thereof, measured in peripheral direction, is greater than the width of the other bar, provision being made for the free cutting bevel (33) comprising the free cutting edge (39) and the support bevel (37).

8. The drill according to any one of the preceding claims, **characterized in that** the main cutting edge region (13), the bevel of which is provided on the same second bar (27) as the support bevel (37), leads axially, thus viewed in the direction of the central axis (11) and in feeding direction (VS) of the drill (1), as compared to the other main cutting edge region (15).

9. The drill according to claim 8, **characterized in that** the axial lead can be realized by means of a greater front center distance (a1, a2) of the leading main cutting edge region.

10. The drill according to claim 8, **characterized in that** the axial lead can be realized by means of a greater setting angle (β) of the leading main cutting edge region.

11. The drill according to claim 8, **characterized in that** the axial lead can be realized by means of a course of the leading main cutting edge region, which deviates from the other main cutting edge region.

12. The drill according to any one of the preceding claims, **characterized in that** the free cutting edge (39) encompasses a setting angle.

13. The drill according to any one of the preceding claims, **characterized in that** it encompasses a point thinning (17, 17').

## Revendications

1. Foret comprenant
- un côté frontal (5) et comprenant
- une surface périphérique (19) adjacente au côté frontal (5), dans lequel
- le côté frontal (5) présente une lame principale (7) avec une lame transversale (9) s'étendant à travers un axe médian (11) du foret (1) et avec deux première et seconde régions de lame principale (13, 15) adjacentes à la lame transversale (9), s'étendant vers la surface périphérique (19),
- la surface périphérique (19) comprend au moins deux rainures de serrage (21, 23) qui limitent entre elles une première et seconde traverses (25, 27), outre ceci trois chanfreins parmi lesquels
- un premier se raccorde à l'extrémité de la première région de lame principale (13) détournée de la lame transversale (9) et sert de chanfrein de dégagement (33), présente en outre une lame de dégagement (39), et
- un deuxième se raccorde à l'extrémité de la seconde région de lame principale (15) détournée de la lame transversale (9) et sert de chanfrein de guidage (35),
- un troisième sert de chanfrein d'appui (37),
**caractérisé en ce que**
- le chanfrein de guidage (35) est disposé sur la première traverse (25) et
- le chanfrein d'appui (37) est disposé avec le chanfrein de dégagement (33) présentant la lame de dégagement (39) sur la seconde traverse (27).

2. Foret selon la revendication 1, **caractérisé en ce que** la seconde traverse (27) est plus large que le première traverse (25), vue dans le sens périphérique.

3. Foret selon la revendication 1 ou 2, **caractérisé en ce que** les chanfreins sont disposés à la surface périphérique (19) du foret (1) de sorte que, lors de l'utilisation du foret (1), des forces sont introduites dans le foret (1) par le biais des chanfreins s'appuyant sur une paroi de perçage dont le résultat s'étend essentiellement parallèlement ou exactement parallèlement à la lame transversale (9) de la lame principale (7).

4. Foret selon l'une quelconque des revendications précédentes, **caractérisé en ce que** le chanfrein d'appui (37) est disposé à un angle de 45° à 100° par rapport à une des extrémités des régions de lame principale (13, 15) détournées de la lame transversale (9).

5. Foret selon l'une quelconque des revendications précédentes, **caractérisé en ce que** l'angle de division (α) entre les régions de lame principale (13, 15) est différent de 180°.

6. Foret selon la revendication 5, **caractérisé en ce que** l'angle de division (α) est > 180°, et que le chanfrein d'appui (37) est disposé dans la région de cet angle de division (α).

7. Foret selon la revendication 5 ou 6, **caractérisé en ce que** le chanfrein de dégagement (33) avec la lame de dégagement (39) et le chanfrein d'appui (37) sont prévus sur la seconde traverse (27) dont la largeur mesurée dans le sens périphérique est supérieure à celle de l'autre.

8. Foret selon l'une quelconque des revendications précédentes, **caractérisé en ce que** la région de lame principale (13) dont le chanfrein est prévu sur la même seconde traverse (27) que le chanfrein d'appui (37) est devant axialement par rapport à l'autre région de lame principale (15), c'est-à-dire vue dans la direction de l'axe médian (11) et dans le sens d'avancement (VS) du foret (1).

9. Foret selon la revendication 8, **caractérisé en ce que** l'avance axiale est réalisable par une position centrale avant supérieure (a1, a2) de la région de lame principale qui est devant.

10. Foret selon la revendication 8, **caractérisé en ce que** l'avance axiale est réalisable par un angle d'incidence supérieur (β) de la région de lame principale qui est devant.

11. Foret selon la revendication 8, **caractérisé en ce que** l'avance axiale est réalisable par une allure déviant par rapport à l'autre région de lame principale de la région de lame principale qui est devant.

12. Foret selon l'une quelconque des revendications précédentes, **caractérisé en ce que** la lame de dégagement (39) présente un angle de dépouille.

13. Foret selon l'une quelconque des revendications précédentes, **caractérisé en ce qu'**il présente un amincissement (17, 17').
